# EUROPEAN PATENT APPLICATION

(11) **EP 4 407 727 A1**
(43) Date of publication of application: **31.07.2024**
(21) Application number: 23153127.8
(22) Date of filing: 24.01.2023
(51) Int. Cl.: H01M 10/04, H01M 50/109, H01M 50/153, H01M 50/169

(54) **A BUTTON BATTERY**

(71) Applicant: Renata AG, 4452 Itingen (CH)
(72) Inventor: GERBER, Marco, 4106 Therwil (CH); PFROMMER, Stefan, 5074 Eiken (CH); HAERING, Pascal, 4147 Aesch (CH); EL BARADAI, Oussama, 4057 Basel (CH); WU, Han, Pembroke Pines, 33029 (US)
(74) Representative: ICB SA

(57) **Abstract**

A button battery according to the invention comprises a first component (1) in the form of a cup-shaped container, an electrode assembly (4) inserted in the container, and furthermore a lid-shaped second component (10) fixed along its outer edge to the upper rim of the sidewall (3) of the container. Either the first or the second component comprises three portions: an electrically conductive central portion (11), an electrically conductive peripheral portion (12) and an electrically insulating intermediate portion (13) that separates and insulates the central portion from the peripheral portion. The sidewall (3) of the first component and the edge of the second component (10) are shaped so as to comprise complementary conical portions (22, 25) which are in mutual contact in the assembled battery. Said complementary conical portions enable the self-alignment of the lid (10) to the rim of the sidewall (3) during assembly of the battery, and further aid in maintaining the lid onto the container during the sealing process which may be a process of welding the lid to the container along a common perimeter. According to preferred embodiments, the edge of the lid (10) and the rim of the sidewall (3) are further provided with step portions (23, 25) configured to define a stop for the insertion of one conical portion into the other.

## Description

### Field of the Invention

The present invention is related to button batteries, well-known as power sources for small electrically driven implements such as watches, thermometers or the like.

### State of the art.

Button batteries, also known as button cells, are widely used and available in a plurality of types, distinguished by various dimensions and shapes and by the materials used for the electrodes and the electrolyte.

Most known types of button batteries include a metallic bottom cup having a flat base portion that serves as the positive contact, and an upstanding sidewall which extends upwards from the flat portion, and a metallic top lid cup. The flat base portion of the lid cup serves as the negative contact. The battery further includes an electrode assembly in the space between the top and bottom cup. In a rechargeable lithium-ion button battery for example, the electrode assembly may be a spiral-shaped assembly obtained by rolling up a stack of electrode layers separated by separator sheets impregnated with a liquid electrolyte. Other electrode assemblies are formed as horizontal stacks of alternately stacked electrode and separator layers oriented parallel to the top and bottom contacts. Button cells are often shaped as round discs but other shapes are possible as well.

The production process of the above-described battery type includes arranging the electrode assembly into the top lid cup and inserting the lid cup into the bottom cup with a gasket or glue-type electrically insulating sealing in between the two for sealing off the electrode assembly from the exterior of the battery. If a physical gasket is used, the open end of the wall of the lid cup is inserted into the gasket and the bottom cup is crimped over the gasket. If a glue-type insulating seal is used, the outside of the sidewall of the top lid cup is coated with the sealing material, after which the top lid cup is inserted into the bottom cup. The glue is allowed to dry or cure, thus sealing the battery.

These known ways of sealing the batteries present a number of drawbacks. One problem is for example the double-wall configuration needed to accommodate either the gasket or the glue : the sidewalls of the top lid cup and the bottom cup must overlap against each other. This results in wasted space that is occupied by the insulating seal, either as a physical gasket or as the sealing glue.

A solution to this problem was found in the form of an improved battery design without the double wall configuration. This battery type is the subject of European patent application EP22178203. The battery still comprises a bottom cup that contains the electrode assembly, and that still acts as the positive contact. The battery further comprises a lid formed of three portions: an electrically conductive central portion, an electrically conductive peripheral portion and an electrically insulating intermediate portion that separates and insulates the central portion from the peripheral portion. The central portion acts as the negative contact and the insulating portion realizes the electrical insulation. The lid is fixed to the open end of the cup, thereby sealing off the battery from the exterior. The fixed connection of the lid to the cup is electrically conductive so that the base of the cup forms the positive contact of the battery.

A problem occurring in the manufacturing process of this battery type is related to the process of fixing the lid to the cup, which may be done by aligning the lid to the rim of the cup's sidewall and by welding (e.g. laser welding) of the lid to said rim along their aligned perimeters. However, obtaining a perfectly sealing weld connection requires that the dimensions of the lid and the cup are matched with a high degree of accuracy. Also, because of the small dimensions of the batteries of this type, it is difficult to maintain the lid in the correct position during the welding process. These problems are likely to lead to an imperfect weld and to a risk of leakage of chemicals from the interior of the battery.

### Summary of the invention

The invention aims to provide a solution to the above-described problems. This aim is achieved by a button battery and by a method of assembling such a battery, in accordance with the appended claims. A button battery according to the invention comprises a first component in the form of a cup-shaped container, an electrode assembly inserted in the container, and furthermore a lid-shaped second component fixed along its outer edge to the upper rim of the upstanding sidewall of the container. Either the first or the second component comprises three portions : an electrically conductive central portion, an electrically conductive peripheral portion and an electrically insulating intermediate portion that separates and insulates the central portion from the peripheral portion. The other component is uniformly formed of electrically conductive material. The electrodes of the electrode assembly are electrically connected to the components in such a manner that the central electrically conductive portion included in one component forms one contact of the battery and the other component forms the other contact of the battery.

In a battery according to the invention, the sidewall of the cup-shaped container and the edge of the lid-shaped second component are shaped so as to comprise complementary conical portions which are in mutual contact in the assembled battery. Said complementary conical portions enable the self-alignment of the lid to the rim of the sidewall during assembly of the battery, and these conical portions also aid in maintaining the lid onto the container during the sealing process which may be a process of welding the lid to the container along a common perimeter of the edge of the lid and the rim of the sidewall. According to preferred embodiments, the edge of the lid and the rim of the sidewall are further provided with step portions configured to define a stop for the insertion of one conical portion into the other.

### Brief description of the figures

Figure 1 illustrates the main components of a battery according to prior patent application EP22178203, comprising a rolled-up electrode assembly.
Figure 2 illustrates the battery of Figure 1 in the assembled state.
Figure 3 shows a section view of the cup and lid of the battery of Figures 1 and 2, prior to the sealing process.
Figures 4a and 4b show typical profiles of the rim of the sidewall and of the edge of the lid in the battery of Figures 1 to 3.
Figures 5a and 5b illustrate matching profiles of the rim of the sidewall and of the edge of the lid, in a battery according to one embodiment of the invention.
Figures 6a and 6b illustrate an embodiment having similar rim and edge profiles as in the previous images, but comprising an additional step portion on the rim of the sidewall.
Figure 7 illustrates the same rim and edge profiles as Figure 5, but in a battery having a lower sidewall thickness.
Figures 8a and 8b illustrate an embodiment wherein the conical portions of the rim and edge profiles are reversed with respect to the embodiments of Figures 5 to 7.
Figures 9a and 9b illustrate embodiments wherein the lid itself or the sidewall includes a truncated part.
Figures 10a and 10b illustrate embodiments of the invention wherein the cup-shaped component comprises central and peripheral conductive portions separated by an insulating portion and wherein the lid-shaped component is uniformly formed of a conductive material.
Figures 11a to 11c illustrate a joining sequence of lid and cup shaped components in accordance with an embodiment of the invention, using friction welding as the method for producing the sealing connection between the components.
Figures 12a to 12c and 13a to 13c illustrate further examples of batteries according to the invention, wherein the components are connected by friction welding.

### Detailed description of embodiments of the invention

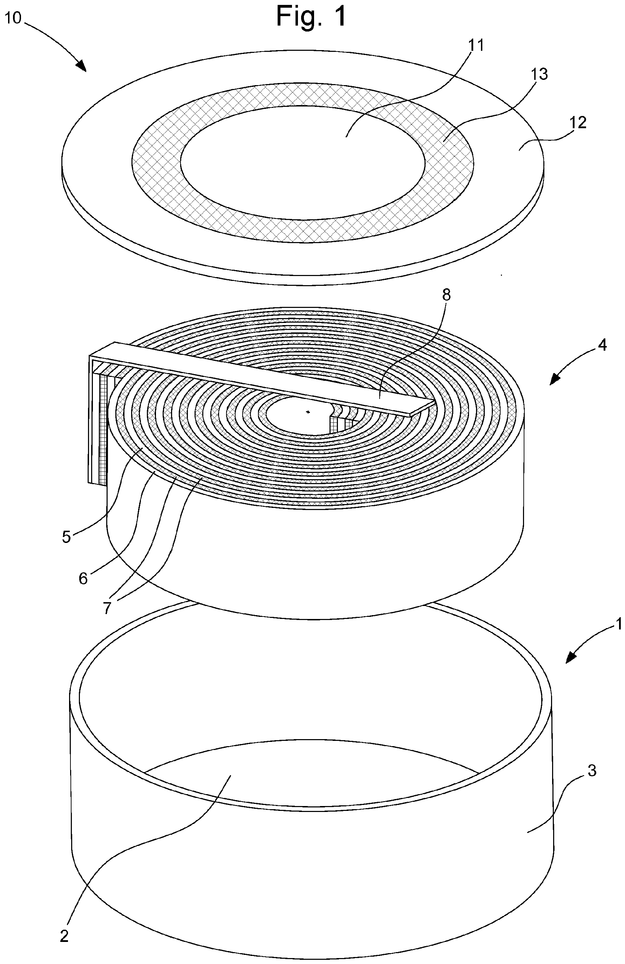

Figure 1 illustrates the components of a rechargeable lithium-ion battery in accordance with patent application EP22178203. The battery comprises an electrically conductive cup-shaped bottom container 1, preferably formed of metal, having a round base 2 and an upstanding sidewall 3 along the circumference of the base 2. Also included is a wound-up electrode assembly 4 consisting of a positive electrode 5, a negative electrode 6 and separator sheets 7 between the wound electrodes, and furthermore comprising current collector strips 8. The image of the electrode assembly 4 is a simplified representation and the assembly 4 may be realized in accordance with any known design thereof. Only the negative collector strip 8, coupled to the negative electrode 6 is visible in the drawing. A positive collector strip coupled to the positive electrode 5 is present on the underside of the electrode assembly 4. The collector strip 8 is shown in simplified fashion as a straight rectangular strip but it may have a different shape than that. As known by the skilled person, the collector strips 8 are preferably flexible so that the end of the strips can be welded to the respective battery contacts.

The battery comprises a lid 10 that comprises three portions: an electrically conductive central portion 11, an electrically conductive peripheral portion 12 and an electrically insulating intermediate portion 13 that separates and electrically isolates the central and peripheral portions 11 and 12 from each other. The three portions 11 to 13 form one single object, i.e. the intermediate portion 13 is joined to the conductive portions 11 and 12 along its respective inner and outer edges. In the embodiment shown in Figure 1, all three portions 11, 12 and 13 of the lid 10 have the same thickness. According to alternative embodiments, the thickness of the parts may differ.

The materials used for the portions 11, 12 and 13 are mechanically strong and chemically stable against the internal materials of the battery. The conductive portions 11 and 12 may be formed of the same material, preferably a metal, as the bottom container 1. Suitable metals include nickel, cobalt and certain types of stainless steel, such as SS 304 and SS 316. The material of the insulating portion 13 is furthermore capable of bonding hermetically onto the material used for portions 11 and 12. The insulating portion 13 may be formed for example of glass, certain types of rubber or PTFE (polytetrafluoroethylene) and any of its derivatives. The lid 10 may be manufactured by well-known processes for joining different materials to each other.

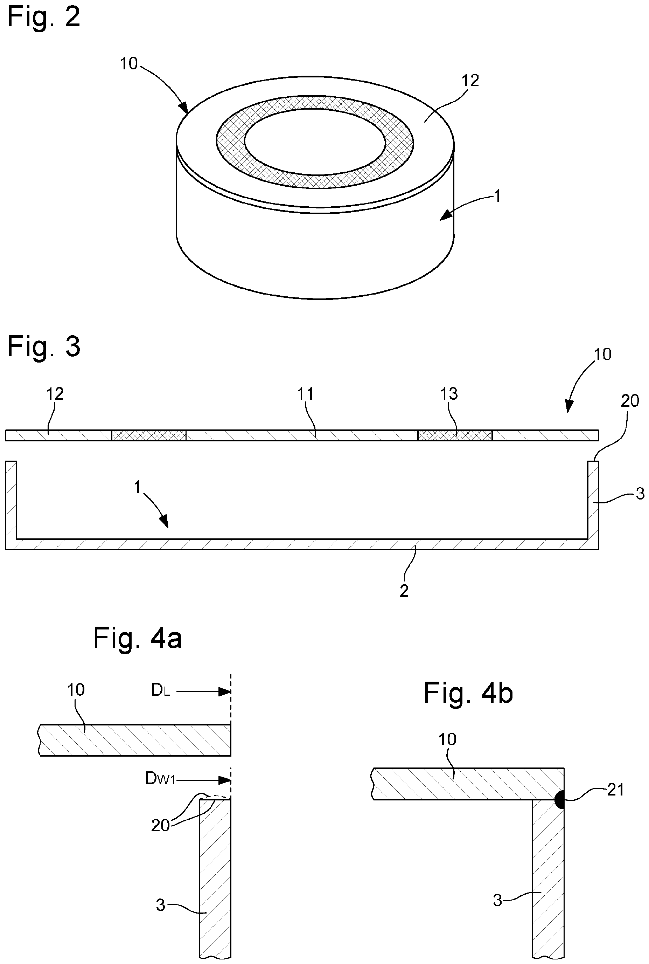

The assembly of the battery according to the embodiment shown includes welding the positive current collector strip to the inside surface of the base 2 of the cup-shaped bottom container 1 and inserting the electrode assembly 4 into said container. A liquid electrolyte is injected in the container 1 and the negative current collector strip 8 is welded to the central portion 11 of the lid 10. The lid 10 is then placed onto the sidewall 3 of the cup-shaped container 1 and joined thereto along its outer edge by a bonding technique that realizes a sealing connection between the lid 10 and the container 1, resulting in the finished battery illustrated in Figure 2. The sealing connection may be realized by welding, for example laser welding.

The battery has a positive contact formed by the base 2 of the cup-shaped container 1, and a negative contact formed by the central portion 11 of the lid 10. The contacts are electrically isolated from each other by the intermediate portion 13 of the lid 10. The sealing connection of the lid's edge to the rim of the upstanding wall 3 is electrically conductive and seals off the interior of the battery 20 from the environment.

Figure 3 shows a section view of the cup 1, with the lid 10 aligned to the rim 20 of the sidewall 3 prior to the realization of the sealing connection. The electrode assembly is not shown in this image. The sidewall 3 may have a rectangular profile, as illustrated in the enlarged detail shown in Figure 4a, i.e. the rim 20 is essentially perpendicular to the sides of the sidewall 3. Alternatively, the rim 20 may be slightly convex, as illustrated by the dotted line in Figure 4a. The latter profile typically occurs when the cup is produced by a deep drawing process. In the example shown, the lid 10 and the sidewall 3 have the same thickness, but there may be a slight difference in thickness between the two. In most batteries, these thicknesses are in the order of a few tens of a millimeter. For example, the thickness of the sidewall 3 may be between 0.1 mm and 0.3 mm, with the thickness of the lid 10 being between 0.1 mm and 0.5 mm. According to a preferred embodiment, the thickness of the sidewall 3 is 0.15 mm and the thickness of the lid 10 is 0.2 mm.

The lid diameter D_{L} is configured to match (i.e. it is as close as possible to) the outer diameter D_{W1} of the sidewall 3. The lid 10 is aligned to said outer diameter D_{W1} and placed onto the rim 20, after which the assembly is subjected to a welding process such as laser welding, as illustrated in Figure 4b, thereby creating a weld connection 21 along the aligned perimeters of the rim 20 and the lid 10. The weld connection 21 is represented symbolically as a black half-circle in the image shown, but it may have a different shape and size in reality, depending for example on the curvature of the rim 20 in the case of a convex rim.

As stated in the introduction, the matching of the diameters of the lid 10 and the sidewall 3 as well as the alignment must be extremely accurate in order for the welding process to be effective in sealing off the battery's interior. Also, displacement of the lid 10 during the welding process is likely to cause additional difficulties in terms of obtaining an effective seal.

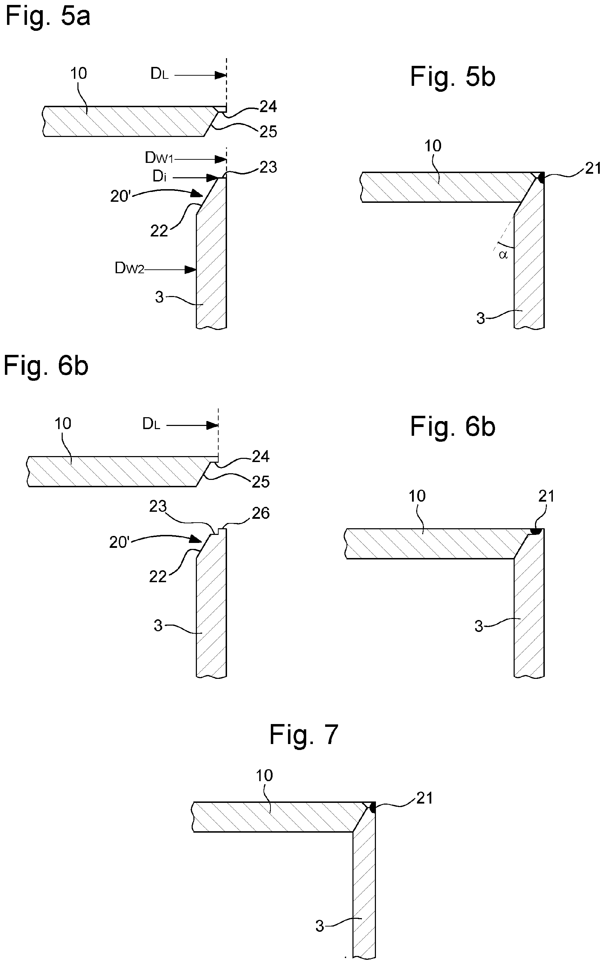

According to the invention, the rim of the sidewall 3 and the edge of the lid 10 are shaped so as to reduce the alignment difficulty as well as the displacement-induced errors, and thereby improve the quality of the sealing connection. Figures 5a and 5b illustrate one embodiment of the invention. It is seen that the rim 20' of the sidewall 3 is provided with a conical portion 22, and a step portion 23. The step portion 23 extends between the outer diameter D_{W1} of the rim 20' and an intermediate diameter Dᵢ. The conical portion 22 extends between the intermediate diameter Dᵢ and the inner diameter D_{W2} of the rim 20'. The edge of the lid 10 is shaped in a corresponding manner, comprising a step portion 24 along its outer diameter, and a conical portion 25 radially inwards of the step portion 24. The conical portions 22 and 25 are complementary, i.e. they have the same inclination angle so that the exterior cone of the lid 10 fits into the interior cone of the rim 20'.

Assembling the lid 10 to the cup 1 now includes inserting the conical portion 25 of the lid 10 into the conical portion 22 of the cup until the step portion 24 of the lid stops on the step portion 23 of the cup. At this point therefore, both the conical portions 22 and 25 and the step portions 23 and 24 are in mutual contact. Following this, the weld connection 21 is produced along the aligned perimeters of the step portions 23 and 24, as illustrated in Figure 5b.

This configuration thereby enables an improved alignment of the lid 10 to the rim 20' of the sidewall 3 due to the self-aligning property of the complementary conical portions 22 and 25. The insertion of one conical portion into the other also realizes a mechanically stable preliminary connection between the lid 10 and the sidewall 3, so that the alignment is more easily maintained during the welding process. The diameter D_{L} of the lid 10 preferably still matches the outer diameter D_{W1} of the sidewall 3 with the same degree of accuracy as in the design of Figures 1 to 4, but a slightly larger mismatch between these diameters may be allowable in this case without reducing the quality of the weld connection, given that the correct alignment is now ensured.

According to another embodiment however, the diameter D_{L} of the lid 10 is made deliberately smaller than the outer diameter of the sidewall 3, as illustrated in Figures 6a and 6b. Here, the rim 20' comprises an additional step portion 26 radially outside of the first step portion 23. The additional step 26 has an inner diameter that matches the diameter D_{L} of the lid 10 and the height of the lid's step portion 24 is essentially equal to the height of the additional step 26 so that the lid 10 is essentially level with said additional step 26 in the assembled battery, as illustrated in Figure 6b. The self-alignment is ensured in the same manner as described above due to the respective conical portions 22 and 25 and step portions 23 and 24. In this case however, the weld connection 21 is made not from the side but from the top, along the perimeter of the lid 10. This may be more practical in some cases.

Figure 7 illustrates an embodiment wherein the thickness of the upstanding wall 3 is smaller than the thickness of the lid 10. In all of the embodiments described so far, the inclination angle α of the complementary conical portions, as indicated in Figure 5b, is about 30°. This angle can however be chosen differently as a function for example of the thickness of the sidewall 3. For example, when the sidewall 3 is significantly thicker than shown in the examples, it may be preferable to make the inclination angle α larger.

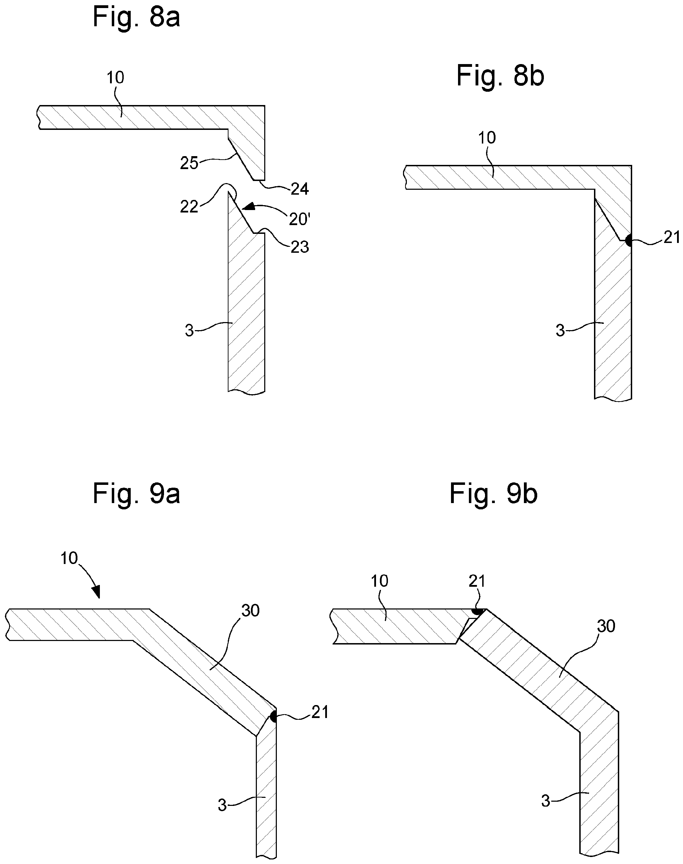

Figures 8a and 8b illustrate an embodiment wherein the orientation of the inclination angles of the conical portions 22 and 25 is reversed compared to the previously described embodiments. The rim 20' of the sidewall 3 now comprises an exterior cone while the lid 10 comprises an interior cone that fits onto the exterior cone of the rim 20'. The step portions 23 and 24 are again present and have the same function as described above.

The invention is not limited to embodiments wherein the lid 10 and the sidewall 3 are perpendicular to each other. Figures 9a and 9b illustrate embodiments wherein respectively the lid 10 and the upstanding wall 3 are provided with a truncated part 30 that becomes narrower towards the top of the battery. It is seen that the conical portions and step portions as described above are also present on the rim of the upstanding wall 3 and on the edge of the lid 10 in these embodiments.

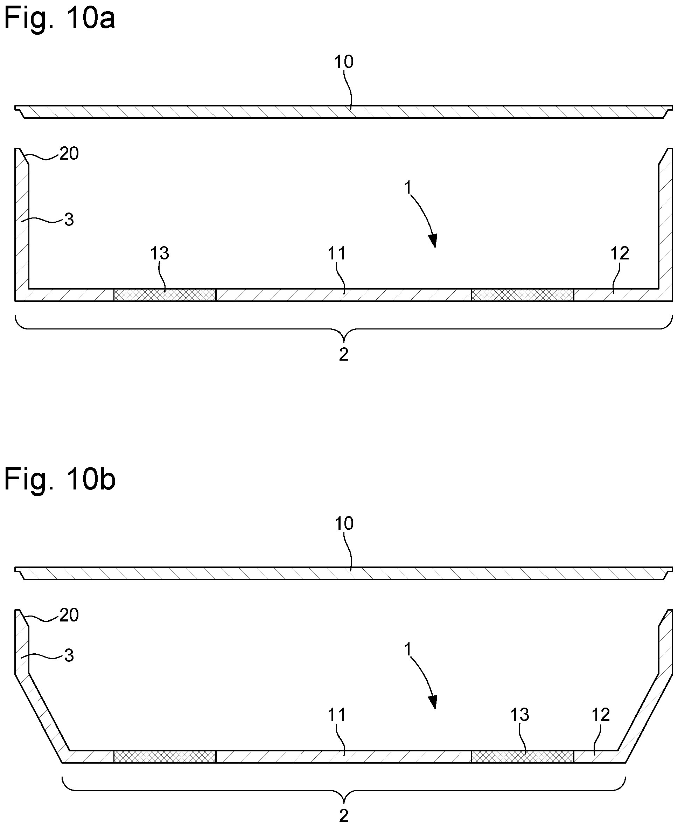

Furthermore, the invention is not limited to embodiments wherein the lid 10 comprises the central and peripheral electrically conductive portions 11 and 12, separated by the insulating portion 13. According to alternative embodiments, the cup-shaped container 1 comprises these portions 11, 12 and 13 and the lid 10 is uniformly formed of electrically conductive material. Examples of such embodiments are illustrated in Figures 10a and 10b. It is seen that the base 2 of the cup-shaped container 1 now comprises the portions 11, 12 and 13. Therefore, in a more general sense, and as reflected by the language of the appended claims, a battery according to the invention comprises a first component 1 shaped as a cup-shaped container and a second, lid-shaped component 10, wherein either one of these components may comprise the portions 11, 12 and 13.

In the embodiments shown in Figure 10a and 10b, all the variations of the present invention are applicable in terms of the matching profiles of the rim 20' of the sidewall 3 and the of the edge of the lid 10.

Although it is preferred to include the step portions 23 and 24 on the rim 20' of the upstanding wall 3 and on the edge of the lid 10, the invention includes embodiments wherein said step portions are omitted, i.e. wherein the lid 10 and the rim 20' are provided only with complementary conical portions, which alone are capable of realizing the self-aligning property and the preliminary connection. Care should then be taken that the insertion of one cone into the other is stopped at a correct relative position of the conical portions, enabling the production of a connection that effectively seals off the interior of the battery.

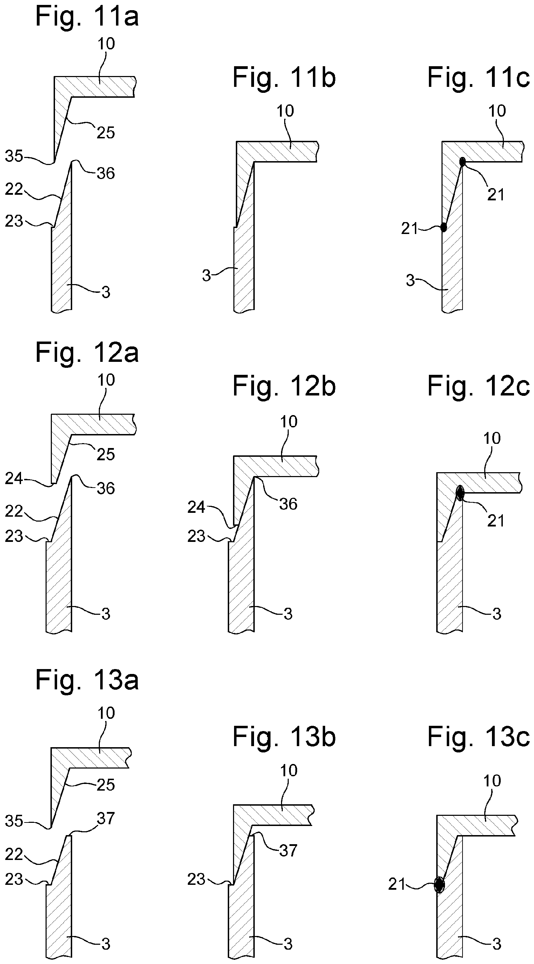

According to other embodiments, only one component is provided with a step portion prior to the joining of the components, while the other is not. Such embodiments may be applicable for example when the components are joined by friction welding. Figures 11a to 11c illustrate an embodiment similar to the embodiment of Figures 8a and 8b. The rim of the sidewall 3 comprises a conical portion 22 and a step portion 23, as in Figure 8a, but the edge of the lid 10 comprises only a conical portion 25 comprising a sharp end 35, and no step portion configured to contact the step portion 23 of the wall 3. When the lid 10 is placed on the sidewall 3, as shown in Figure 11b, the sharp end 35 contacts the step portion 23. Likewise, the sharp upper end 36 of the conical portion 22 of the sidewall 3 contacts the inner surface of the lid 10. In the condition shown in Figure 11b, the components are subjected to friction welding, for example in an ultrasonic welding tool. In the contact regions of the sharp ends 35 and 36, at least one of the materials of the sidewall 3 and the lid 10 is brought to a temperature above the melting temperature, hence the material melts locally and forms a weld connection. Figure 11c shows the joined components after the welding step. Due to the local melting of the materials, the lid 10 has descended slightly with respect to the sidewall 3, to the point where the side of the lid 10 and the sidewall 3 are essentially flush. This embodiment is an illustration of the fact that the components can be connected by more than one weld connection 21. The embodiment also illustrates that in the finished battery, it is possible that the step portion 23 is no longer discernable as it has been enveloped by the lower weld connection 21. In embodiments like the one shown in Figure 5a and 5b, it may also be possible that the step portions 23 and 24 are no longer discernable in the finished battery, if the weld area 21 extends beyond the width of the step portions 23 and 24.

Another aspect related to friction welding is illustrated in Figures 12a to 12c and 13a to 13c. As seen in Figure 12a, both the sidewall 3 and the edge of the lid 10 are provided with corresponding step portions 23 and 24, and equally corresponding conical portions 22 and 25, as in Figures 8a and 8b, but now the conical portion 22 of the sidewall 3 is longer so that when the lid 10 is placed onto the sidewall 3 (as shown in Figure 12b), the sharp end 36 of the sidewall 3 contacts the inner surface of the lid 10 before the step portions 23 and 24 are able to enter into mutual contact. This assembly is then subjected to friction welding, resulting in the joined assembly shown in Figure 12c. The weld connection 21 is formed by the local melting around the sharp end 36, which has caused the lid 10 to descend until it is stopped by the mutual contacting of the step portions 23 and 24. So in this case, the step portions fulfill their function of defining the lid position during the welding step rather than prior to the welding step.

Figures 13a to 13c show a similar embodiment, but now the sidewall 3 comprises an additional step portion 37 radially inward of the conical portion 22. As seen in Figure 13b, the sharp end 35 of the conical portion 25 of the lid now contacts the step portion 23 before the second step portion 37 contacts the inner surface of the lid 10. After friction welding, the step portion 37 and said inner surface are in mutual contact, while the weld connection 21 is formed along the outer circumference of the assembly.

In the embodiments described above, the step portions 23, 24 and 26 have been represented as having a top surface that is straight and essentially parallel to the base 2 of the cup 1. These step portions could however be slightly rounded, for example when the rim 20' is obtained by shaping a convex rim as illustrated in Figure 4a by the dotted line. The shaping of the edge of the lid 10 and of the rim 20' of the sidewall 3 may be done by standard machining techniques.

Batteries according to the invention are not limited to a round shape but may have any other shape such as rectangular or square.

In some of the embodiments described above, the bottom contact is referred to as the positive contact and the top contact is referred to as the negative contact. The invention is however not limited to that configuration, hence the reference to 'first and second' contacts in the appended claims.

In general terms, the method of the invention for assembling a battery according to any embodiment of the invention comprises the following steps, with reference to any one of the embodiments shown in the drawings:
- aligning the edge of the second component 10 to the rim 20' of the sidewall 3 of the first component 1,
- inserting the conical portion 25 of the edge of the second component 10 into the conical portion 22 of the rim 20' of the sidewall 3 or vice versa (i.e. inserting the conical portion 22 of the rim 20' into the conical portion 25 of the lid 10, as in Figures 8a and 8b), so that the conical portions 22,25 are in mutual contact.
- fixing the edge of the second component 10 to the rim 20' of the sidewall 3 by a sealing connection.

The steps of 'aligning' and 'inserting' are related to the relative movements of the components, for example aligning may be done by actively moving the lid relative to a stationary container or by moving the container relative to a stationary lid. Inserting may be done by actively inserting a positive cone into a stationary negative cone or by placing a negative cone over a stationary positive cone.

If both components are provided with a step portion 23 and 24, the relative insertion of the conical portions may end when these step portions come into mutual contact. The fixing step is then performed, for example by forming a weld connection along the outer perimeters of the step portions, as illustrated in Figures 5a and 5b. According to other embodiments involving friction welding, illustrated for example in Figures 12a to 12c, the step portions only enter into mutual contact during the fixing step.

The method of the invention is not limited to embodiments wherein the last step of fixing the components is done by laser welding or friction welding. Other types of welding may be applied such as arc welding. Besides welding, other joining techniques may be applied, such as gluing or applying a polymer-based adhesive followed by curing. Which technique is most suitable may depend on the shape of the profiles of the joined components.

While the invention has been illustrated and described in detail in the drawings and foregoing description, such illustration and description are to be considered illustrative or exemplary and not restrictive. Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A button battery comprising:
- a first component (1) in the form of a cup-shaped container having a base (2) and a sidewall (3) along the outer circumference of the base, the interior of the container comprising an electrode assembly (4) comprising at least one first electrode (5), one or more separator sheets (7) and at least one second electrode (6),
- a lid-shaped second component (10),
wherein:
- the outer edge of the second component (10) is fixed to the upper rim of the sidewall (3), by at least one electrically conductive connection (21) that seals the interior of the battery (20) from the environment,
- either the first or the second component comprises a central electrically conductive portion (11), a peripheral electrically conductive portion (12) and an insulating portion (13) that separates and electrically isolates the central portion (11) from the peripheral portion (12),
- the other component is integrally formed of electrically conductive material,
- the electrodes (5,6) of the electrode assembly are electrically connected to the components in such a manner that the central electrically conductive portion (11) included in one component forms a first contact of the battery and the other component forms a second contact of the battery,
**characterized in that**:
- the rim (20') of the sidewall (3) comprises a conical portion (22),
- said outer edge of the second component (10) comprises a conical portion (25) that is complementary to the conical portion (22) of the rim,
- the conical portions (22,25) of the rim and of the second component are in mutual physical contact.

2. A battery according to claim 1, wherein said rim (20') and said outer edge further comprise a step portion (23,24) [SVG1]and wherein said step portions are also in mutual physical contact.

3. A battery according to claim 2 wherein:
- the rim (20) is provided with a negative conical portion (22) and the edge is provided with a positive conical portion (25),
- said step portion (23) of the rim (20') is a first step portion lying radially outside the conical portion (22),
- the rim (20') comprises an additional step portion (26) radially outside the first step portion (23),
- the edge of the second component (10) is essentially level with the additional step portion (26).

4. A battery according to any one of the preceding claims, wherein said at least one sealing connection (21) is a welded connection.

5. A battery according to any one of the preceding claims, wherein the base (2) of the cup-shaped container (1) is circular in shape.

6. A battery according to claim 5, wherein the electrode assembly (4) comprises a wound-up stack of at least one first electrode (5), at least one second electrode (6) and at least one separator sheet (7), the assembly further comprising current collector strips (8) electrically connected respectively to the at least one first electrode (5) and to the at least one second electrode(6), and to the first contact and the second contact of the battery or vice versa.

7. A battery according to any one of claims 1 to 5, wherein said electrode assembly (4) is a stacked electrode assembly

8. A battery according to any one of the preceding claims, wherein the lid-shaped second component (10) is oriented perpendicularly to the sidewall (3).

9. A battery according to any one of claims 1 to 7, wherein the lid-shaped second component (10) or the sidewall (3) comprises a truncated part (30).

10. A method for assembling a button battery according to any one of the preceding claims, comprising the steps of:
- aligning the edge of the second component (10) to the rim (20') of the sidewall (3) of the first component (1),
- inserting the conical portion (25) of the edge of the second component (10) into the conical portion (22) of the rim (20') of the sidewall (3) or vice versa, so that the conical portions (22,25) are in mutual contact,
- fixing the edge of the second component (10) to the rim (20') of the sidewall (3) by at least one sealing connection (21).

11. A method according to claim 10, wherein the rim (20') of the sidewall (3) and the edge of the second component (10) are provided with step portions (23, 24), and wherein the insertion of the conical portion is stopped when the step portions enter into mutual contact.

12. A method according to claim 10 or 11, wherein the step of fixing the edge of the second component (10) to the rim (20') of the sidewall (3) takes place by one of the following techniques: welding, gluing, curing a polymer based adhesive.

13. A method according to claim 12, wherein the applied technique is laser welding or friction welding.

14. A method according to claim 13, wherein the applied technique is friction welding, and wherein at least one of the components comprises a conical portion having a sharp end (35,36), and wherein the other component comprises a step portion or a surface configured so that the sharp end contacts the step portion or surface after the insertion step, and wherein during the fixing step the material of at least one of the components around the sharp end or ends melts locally in the vicinity thereof, to thereby create at least one weld connection (21).
